# FASCICULE DE BREVET EUROPEEN

(11) **EP 3 759 933 B1**
(45) Date de publication et mention de la délivrance du brevet: **30.03.2022**
(21) Numéro de dépôt: 19705194.9
(22) Date de dépôt: 21.02.2019
(51) Int. Cl.: H04N 21/443, H04N 5/63

(54) **PROCÉDÉ DE MISES EN VEILLE AUTOMATIQUES**
VERFAHREN ZUM AUTOMATISCHEN PLATZIEREN AUF STANDBY
METHOD OF AUTOMATIC PLACEMENT ON STANDBY

(30) Priorité: 26.02.2018 FR 1851640
(43) Date de publication de la demande: 06.01.2021
(73) Titulaire: SAGEMCOM BROADBAND SAS, 92500 Rueil-Malmaison (FR)
(72) Inventeur: BOISTAULT, Etienne, 92500 RUEIL MALMAISON (FR)
(74) Mandataire: Cabinet Le Guen Maillet
(86) Numéro de dépôt international: PCT/EP2019/054268
(87) Numéro de publication internationale: WO 2019/162354

(56) Documents cités:
- US-A1- 2003 105 794
- US-A1- 2011 261 045
- US-B2- 9 883 132

## Description

La présente invention concerne un procédé de gestion de mises en veille automatiques d'un système de décodage audio/vidéo et un dispositif mettant en œuvre le procédé.

La réduction de la consommation énergétique des systèmes électroniques est devenue un enjeu majeur. C'est notamment le cas des systèmes électroniques destinés à rester activés sur de longues périodes, voire de rester constamment activés. C'est le cas notamment de certains serveurs informatiques, de passerelles résidentielles, de dispositifs de communication Wi-Fi ou CPL (Courants porteurs en lignes). Un moyen connu pour réduire la consommation énergétique d'un système électronique consiste à faire fonctionner ce système suivant au moins deux modes : un mode de fonctionnement dit *mode actif*, dans lequel toutes les fonctionnalités du système sont activées et la consommation énergétique du système est importante, et un mode de fonctionnement, dit *mode de veille*, dans lequel un nombre limité de fonctionnalités du dispositif sont activées et où la consommation énergétique du système est minimum. Beaucoup de systèmes prévoient aussi une extinction totale mais le mode de veille est en général préféré à l'extinction totale car il permet un redémarrage plus rapide du dispositif.

Un dispositif de décodage audio/vidéo, aussi appelé décodeur TV (« set top box » en terminologie anglo-saxonne), est typiquement un dispositif électronique pour lequel la possibilité de fonctionner suivant un mode actif et un mode de veille est utile. C'est en effet un dispositif ne devant pas fonctionner en mode actif constamment, mais qu'un utilisateur souhaite voir redémarrer rapidement en cas de besoin.

Pour gérer les oublis de mise en veille des utilisateurs, certains dispositifs électroniques sont équipés d'un module de mise en veille automatique. Suivant des critères de mise en veille plus ou moins élaborés, ces modules mettent automatiquement en veille les dispositifs électroniques sans attendre une instruction explicite des utilisateurs.

Le document US20090195702A1 propose un procédé de mise en veille automatique d'un dispositif électronique basé sur une observation d'un délai d'inactivité des utilisateurs. Si aucune interaction n'est constatée entre le dispositif électronique et un utilisateur pendant une durée prédéfinie, le dispositif électronique se met en veille. Ce procédé ne prend donc nullement en compte des habitudes des utilisateurs. Par ailleurs, si on adapte ce procédé à un décodeur TV, ce procédé peut provoquer la mise en veille du décodeur TV pendant un programme en cours de diffusion par le décodeur TV.

Le document CN104580710A propose un procédé de mise en veille automatique d'un dispositif électronique prenant en compte des habitudes des utilisateurs. Les informations représentatives des habitudes des utilisateurs sont des heures de passage du mode actif au mode de veille ou des heures de passage du mode de veille au mode actif. L'utilisation de ces informations améliore la pertinence des passages en mode de veille mais n'empêcherait pas la mise en veille d'un décodeur TV pendant un programme en cours de diffusion.

Le document US 2011/261045 A1 propose un système de mise en veille automatique prenant en compte des habitudes des utilisateurs, notamment le type des opérations effectuées par l'utilisateur.

Il est souhaitable de pallier ces inconvénients de l'état de la technique. Il est notamment souhaitable de proposer une méthode qui permette de prendre en compte plus finement les habitudes des utilisateurs d'un décodeur TV. Il serait aussi souhaitable que cette méthode permette d'éviter des passages en mode de veille pendant la diffusion d'un programme qui est habituellement visualisé.

Il est de plus souhaitable de fournir une solution qui soit simple à mettre en œuvre et à faible coût.

Selon un premier aspect de la présente invention, la présente invention concerne un procédé de gestion de mises en veille automatiques d'un système de décodage audio/vidéo, le procédé comprenant : obtenir une information représentative d'un programme en cours de diffusion par ledit système, dit programme cible ; effectuer une recherche de programmes similaires au programme cible suivant un ou des critères de similarité prédéfinis dans une base de données d'informations représentatives de programmes précédemment diffusés par ledit système, la diffusion de ces programmes ayant été interrompue par une mise en veille ; déterminer un seuil de durée d'inactivité en fonction du nombre de programmes de la base de données similaires au programme cible ; lancer une procédure de mise en veille du système si aucune interaction n'est constatée entre un utilisateur et le système pendant une période égale au seuil de durée d'inactivité déterminé après la fin du programme cible.

De cette manière, on évite de mettre en veille un système pendant la diffusion d'un programme qui est habituellement visualisé par l'utilisateur. Par ailleurs, le système est mis en veille plus rapidement lorsque le programme cible est connu pour être un programme après lequel le système est habituellement mis en veille.

Selon un mode de réalisation, la procédure de mise en veille du système comprend: émettre une notification destinée à un utilisateur avisant ledit utilisateur de la mise en veille imminente dudit système si aucune interaction n'est constatée entre ledit utilisateur et ledit système pendant la période égale au seuil de durée d'inactivité déterminé après la fin du programme cible ; et, mettre le système en veille si aucune interaction n'est constatée entre l'utilisateur et le système pendant une période prédéfinie après l'émission de la notification.

Selon un mode de réalisation, pour chaque programme de la base de données similaire au programme cible suivant le ou au moins un des critères de similarité prédéfinis trouvé lors de la recherche, pour chaque critère respecté, une valeur de compteur correspondant audit critère est incrémentée d'une unité, et lorsque, suite à la recherche de programmes similaires, la valeur de compteur correspondant audit critère ou à un desdits critères dépasse une valeur de compteur prédéfinie correspondant audit critère, le seuil de durée est fixé à une première durée prédéfinie et le programme cible est déclaré candidat à une mise en veille accélérée, sinon le seuil de durée est fixé à une seconde durée prédéfinie supérieure à la première durée prédéfinie et le programme cible est déclaré candidat à une mise en veille classique.

Selon un mode de réalisation, préalablement à l'émission de la notification et à la mise en veille du système, le procédé comprend : vérifier si un programme suivant immédiatement le programme cible est candidat à une mise en veille accélérée ou à une mise en veille classique ; n'effectuer l'émission de la notification et la mise en veille que si ledit programme suivant est candidat à une mise en veille classique.

Selon un mode de réalisation, la recherche de programmes similaires est basée sur un critère de similarité de nom, un premier programme dont le nom correspond au moins à un pourcentage prédéfini au nom d'un second programme étant considéré comme similaire au second programme, et/ou sur un critère de similarité d'heure de début, un premier programme dont l'heure de début est proche de l'heure de début d'un second programme d'un écart inférieur à un premier écart prédéfini est considéré comme similaire au second programme, et/ou sur un critère de similarité d'heure de fin, un premier programme dont l'heure de fin est proche de l'heure de fin d'un second programme d'un écart inférieur à un deuxième écart prédéfini est considéré comme similaire au second programme.

Selon un mode de réalisation, les informations représentatives de programmes sont issues d'un guide de programme électronique reçu par le système de décodage audio/vidéo.

Selon un mode de réalisation, préalablement à son utilisation, la base de données est créée en extrayant du guide de programme électronique, lors de chaque changement de chaîne de télévision sur le système de décodage audio/vidéo ou à intervalle prédéfini, des informations représentatives d'un programme en cours de diffusion, puis en stockant les informations représentatives extraites correspondant au dernier programme diffusé avant une mise en veille dans la base de données.

Selon un mode de réalisation, la base de données est stockée en mémoire non volatile du système de décodage audio/vidéo.

Selon un deuxième aspect de l'invention, l'invention concerne un dispositif adapté pour gérer des mises en veille automatiques d'un système de décodage audio/vidéo comprenant : des moyens pour obtenir une information représentative d'un programme en cours de diffusion par ledit système, dit programme cible ; des moyens pour effectuer une recherche de programmes similaires au programme cible suivant un ou des critères de similarité prédéfinis dans une base de données d'informations représentatives de programmes précédemment diffusés par ledit système ;
des moyens pour déterminer un seuil de durée d'inactivité en fonction du nombre de programmes de la base de données similaires au programme cible ;
et des moyens pour lancer une procédure de mise en veille du système si aucune interaction n'est constatée entre un utilisateur et le système pendant une période égale au seuil de durée d'inactivité déterminé après la fin du programme cible.

Selon un troisième aspect de l'invention, l'invention concerne un programme d'ordinateur, comprenant des instructions pour mettre en œuvre, par un dispositif, le procédé selon le premier aspect lorsque ledit programme est exécuté par un processeur dudit dispositif.

Selon un quatrième aspect de l'invention, l'invention concerne des moyens de stockage, stockant un programme d'ordinateur comprenant des instructions pour mettre en œuvre, par un dispositif, le procédé selon le premier aspect lorsque ledit programme est exécuté par un processeur dudit dispositif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un exemple de système dans lequel est mise en œuvre l'invention ;
- la Fig. 2 illustre schématiquement un exemple d'architecture matérielle d'un module de traitement compris dans un décodeur TV et mettant en œuvre l'invention;
- la Fig. 3 illustre schématiquement un procédé de création et de mise à jour d'une base de données de programmes ;
- la Fig. 4 illustre schématiquement un premier exemple de procédé de mises en veille automatiques d'un décodeur TV ; et,
- la Fig. 5 illustre schématiquement un deuxième exemple de procédé de mises en veille automatiques d'un décodeur TV.

Par la suite nous décrivons l'invention dans un contexte d'un décodeur TV. L'invention pourrait toutefois être adaptée à tout système électronique pouvant fonctionner dans un mode actif et dans un mode de veille et capable de diffuser des programmes audio et/ou vidéo tel que par exemple, un récepteur radio, un ordinateur, un enregistreur numérique ou un téléviseur numérique. Par ailleurs nous évoquons par la suite deux modes de fonctionnement : le mode actif et le mode de veille. Mais l'invention pourrait tout aussi bien fonctionner dans le cadre d'un système pouvant fonctionner suivant un mode actif et une pluralité de modes de veille différents tels qu'un mode de veille légère et un mode de veille approfondie, le mode de veille légère permettant de redémarrer plus rapidement le système électronique que le mode de veille approfondie, mais en contrepartie ayant une consommation électrique plus importante que le mode de veille approfondie.

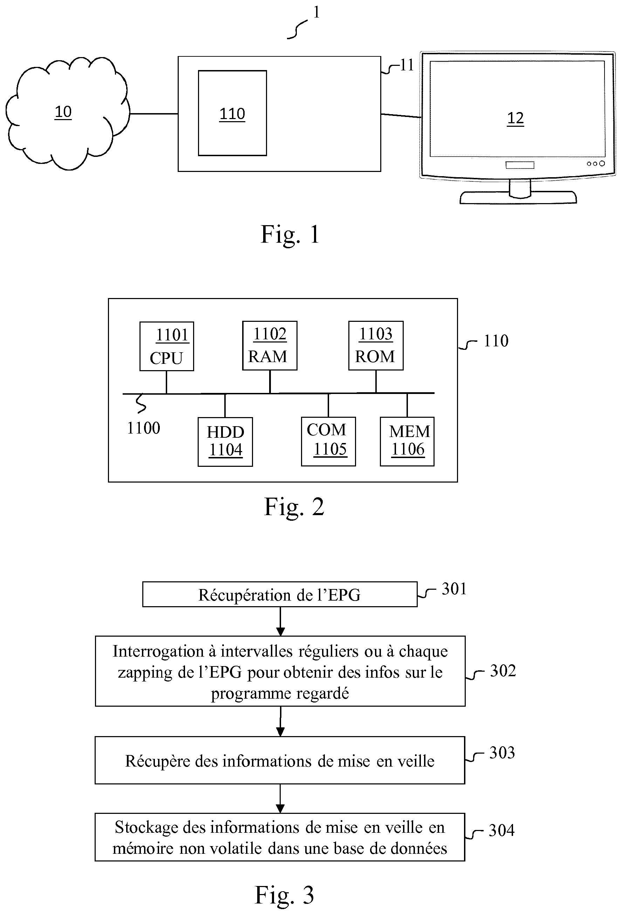

La **Fig. 1** illustre schématiquement un exemple de système 1 dans lequel est mise en œuvre l'invention.

Le système 1 comprend un décodeur TV 11 connecté d'un côté à un écran 12 et d'un autre côté à un réseau de communication 10. Le réseau de communication est par exemple un réseau de diffusion satellite, hertzien ou par câble. Le décodeur TV 11 reçoit du réseau de communication 10 un flux de données comprenant une pluralité de chaînes de télévision multiplexées et un guide de programmes électronique (Electronic program Guide (EPG) en terminologie anglo-saxonne).

Le flux de données est, par exemple, un flux DVB (« Digital Video Broadcast » en terminologie anglo-saxonne).

Chaque chaîne de télévision contenue dans le flux DVB est reçue dans un format compressé tel que par exemple le format MPEG-2 (Moving Picture Expert Group 2^{nd} generation : ISO/CEI 13818-2), AVC (H264/AVC (ISO/IEC 14496-10 - MPEG-4 Part 10, codage vidéo avancé (« Advanced Video Coding » en terminologie anglo-saxonne) / ITU-T H.264) ou HEVC (High Efficiency Video Coding en terminologie anglo-saxonne) / ITU-T H.265).

Les informations permettant de régénérer le guide de programmes électronique sont encodées dans le flux DVB sous forme de tables DVB. Ces informations comprennent des informations détaillées sur des programmes télévisuels (simplement appelés *programmes* par la suite) passés, en cours ou futurs, transmis dans le flux de données. Parmi les tables DVB, on trouve une liste de chaînes de télévision contenues dans le flux, une liste de services, des informations d'horodatage, mais aussi, une table EIT (Event Information Table) qui décrit les programmes diffusés par chaque chaîne de télévision (nom du programme, heure de début, durée, etc.) et les services.

Lors de la réception du flux DVB, le décodeur TV 11 le démultiplexe afin d'extraire les différents flux audio/vidéo correspondant à chaque chaîne et les informations relatives au guide de programmes électronique. Au moins un des flux audio/vidéo est décodé pour affichage sur l'écran 12. Les informations relatives au guide de programmes électronique, notamment les tables EIT, sont elles aussi décodées afin de reformer le guide de programmes électronique.

Le décodeur TV 11 comprend un module de traitement 110 qui exécute le procédé de gestion de mises en veille automatiques selon l'invention lorsque le décodeur TV 11 est en mode actif.

Dans un mode de réalisation, le réseau de communication 10 est un réseau internet. Dans ce cas, une passerelle résidentielle est connectée au réseau 10 et le décodeur TV 11 est connecté sur la passerelle résidentielle.

On note que l'invention est adaptée à d'autres technologies de diffusion telles que l'ATSC (comité des systèmes de télévision avancés, « Advanced Television System Commitee » en terminologie anglo-saxonne), l'ISDB (services de diffusion numérique intégré, « Integrated Services Digital Broadcasting » en terminologie anglo-saxonne) et le DTMB (diffusion multimédia numérique terrestre, « Digital Terrestrial Multimedia Broadcast », en terminologie anglo-saxonne).

La **Fig.2** illustre schématiquement un exemple d'architecture matérielle du module de traitement 110 compris dans le décodeur TV 11. Le module de traitement 110 comprend alors, reliés par un bus de communication 1100: un processeur ou CPU 1101 ; une mémoire vive RAM 1102 ; une mémoire morte ROM 1103 ; une unité de stockage ou un lecteur de support de stockage, tel qu'un lecteur de cartes SD 1104 ; un ensemble d'interfaces de communication 1105 permettant au module de traitement 110 de communiquer avec d'autres modules du décodeur TV 11, et notamment un module lui fournissant le guide de programmes électronique, un module lui fournissant des notifications de passage en mode de veille du décodeur TV 11, etc. Le module de traitement 110 comprend en outre une mémoire non volatile 1106 permettant de conserver des informations générées par le procédé même en cas de mise en veille ou d'arrêt complet du décodeur TV 11, notamment une base de données représentatives d'habitudes d'un utilisateur du décodeur TV 11.

Le processeur 1101 est capable d'exécuter des instructions chargées dans la RAM 1102 à partir de la ROM 1103, d'une mémoire externe (non représentée), d'un support de stockage, tel qu'une carte SD, ou d'un réseau de communication. Lorsque le décodeur TV 11 est mis sous tension, le processeur 1101 est capable de lire de la RAM 1102 des instructions et de les exécuter. Ces instructions forment un programme d'ordinateur causant la mise en œuvre, par le processeur 1101, du procédé décrit en relation avec les Figs. 3, 4 et 5.

Tout ou partie du procédé décrit en relation avec les Figs. 3, 4 et 5 peut être implémenté sous forme logicielle par exécution d'un ensemble d'instructions par une machine programmable, telle qu'un DSP (« Digital Signal Processor » en terminologie anglo-saxonne) ou un microcontrôleur, ou être implémenté sous forme matérielle par une machine ou un composant dédié, tel qu'un FPGA (« Field-Programmable Gate Array » en terminologie anglo-saxonne) ou un ASIC (« Application-Specific Integrated Circuit » en terminologie anglo-saxonne).

Le procédé de gestion de mises en veille automatiques de l'invention prend en compte des habitudes d'un utilisateur du décodeur TV 11. Toutefois, ce procédé va plus loin que les procédés de l'art antérieur puisque ce procédé n'est pas basé uniquement sur des statistiques d'heures de passage du mode de veille vers le mode actif et/ou du mode actif vers le mode de veille, mais aussi sur une analyse des programmes diffusés par le décodeur TV 11 sur l'écran 12.

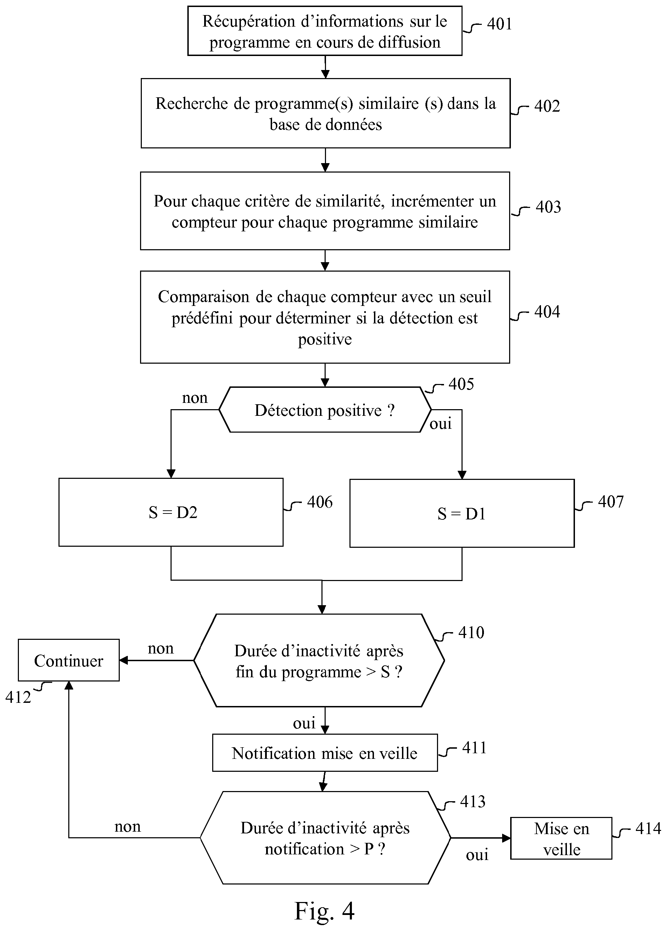

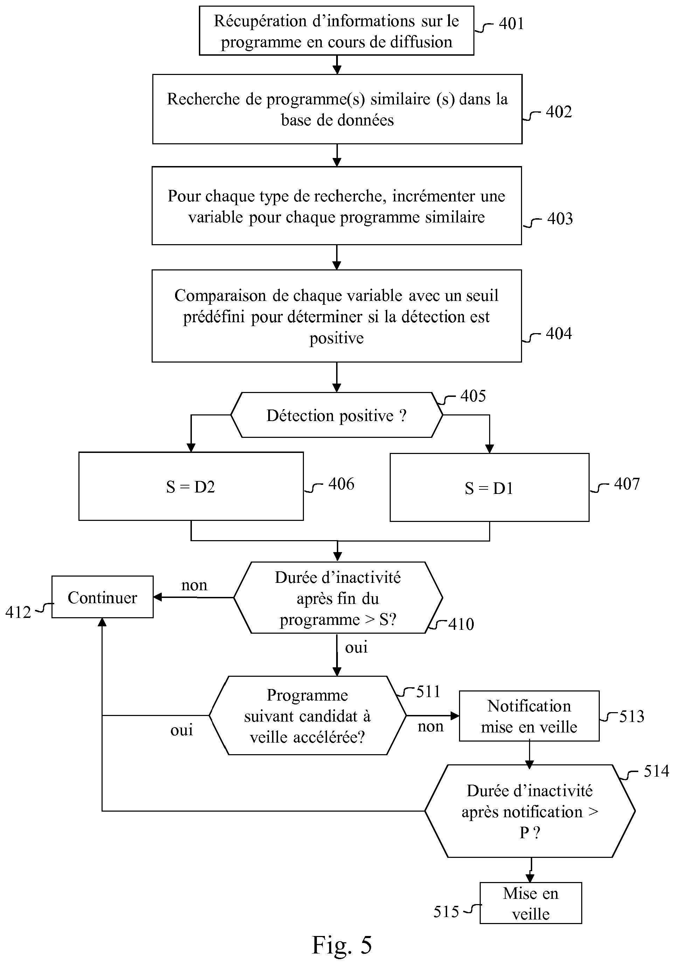

Le procédé de gestion de mises en veille automatiques utilise une base de données d'informations de mise en veille du décodeur TV 11, appelée simplement *base de données* par la suite. Cette base de données est créée et mise à jour en continu par le module de traitement 110 lorsque le décodeur TV 11 est en mode actif. La base de données est alimentée avec des informations représentatives de mises en veille extraites notamment du guide de programmes électronique selon un procédé décrit en relation avec la Fig. 3. En utilisant cette base de données, le module de traitement 110 détermine quand le décodeur TV 11 peut être mis en veille selon un procédé décrit en relation avec la Fig. 4 ou selon la Fig. 5.

La **Fig. 3** illustre schématiquement un procédé de création et de mise à jour de la base de données de mise en veille.

Dans une étape 301, le module de traitement 110 récupère ou met à jour le guide de programmes électronique à partir des informations correspondant à ce guide de programmes électronique contenues dans le flux de données reçu par le décodeur TV 11. Cette étape est exécutée à intervalles réguliers, par exemple toutes les 10 minutes, par le module de traitement 110 afin que le décodeur TV 11 ait constamment une connaissance à jour du guide de programmes électronique.

Dans une étape 302, le module de traitement 110 interroge le guide de programmes électronique pour obtenir des informations sur le programme en cours de diffusion par le décodeur TV 11 sur l'écran 12. L'étape 302 est elle aussi exécutée régulièrement par le module de traitement 110, par exemple toutes le minutes, afin que le module de traitement 110 ait constamment connaissance du programme diffusé par le décodeur TV 11.

Dans une étape 303, lors de chaque passage du décodeur TV 11 en mode de veille, le module de traitement 110 récupère un ensemble d'informations représentatives de la mise en veille et stocke cet ensemble dans la base de données lors d'une étape 304. L'ensemble d'informations représentatives de la mise en veille comprend des informations représentatives d'un programme précédent le programme en cours de visualisation au moment de la mise en veille, dit programme sauvegardé. Les informations représentatives du programme sauvegardé proviennent du guide de programmes électronique et comprennent :
- Un nom de programme ;
- Une date et une heure de début du programme ;
- Une date et une heure de fin du programme.

Chaque ensemble d'informations représentatives d'une mise en veille stocké dans la base de données constitue une entrée de la base de données. Chaque entrée est donc une information représentative d'un programme précédemment diffusé par le décodeur TV 11, la diffusion du programme suivant le programme sauvegardé ayant été interrompue par une mise en veille.

La base de données est, par exemple, une base de données de type SQL (langage de requête structurée : « Structured Query Language » en terminologie anglo-saxonne) ou aux formats JSON (Notation d'objet Javascript : « JavaScript Object Notation » en terminologie anglo-saxonne) ou XML (langage de balisage extensible : « Extensible Markup Language » en terminologie anglo-saxonne). Cette base de données est stockée dans la mémoire non volatile 1106 de manière à être conservée par le module de traitement 110 en cas de mise en veille ou d'arrêt complet du décodeur TV 11.

A la lecture du procédé décrit en relation avec la Fig. 3, on se rend compte que la base de données est alimentée au fur et à mesure des mises en veille du décodeur TV 11. Toutefois, les habitudes d'un utilisateur peuvent évoluer au fil du temps. Afin de conserver dans la base de données des informations représentatives d'habitudes en vigueur de l'utilisateur, le nombre d'entrées stockées dans la base de données est limité à un nombre maximal prédéfini. Par exemple, le nombre maximal prédéfini est fixé à cent. Le module de traitement 110 conserve donc au maximum cent entrées, correspondant aux cent entrées les plus récentes. Lorsque le nombre maximum prédéfini est atteint, les entrées les plus anciennes sont remplacées par des entrées plus récentes. La base de données fonctionne donc comme une FIFO (premier entré, premier sortie : « First in, First out » en terminologie anglo-saxonne).

Dans un mode de réalisation, les informations sur la mise en veille comprennent en outre, pour chaque entrée de la base de données, une date et une heure de mise en veille du décodeur TV 11. Le module de traitement 110 utilise alors ces dates et heures de mise en veille pour déterminer les entrées les plus anciennes dans la base de données.

Dans un mode de réalisation, l'ensemble d'informations représentatives de la mise en veille comprend une information représentative de la chaîne de télévision ayant diffusé le programme sauvegardé. Par conséquent, chaque entrée de la base de données comprend en outre une information représentative d'une chaîne de télévision.

La base de données ainsi créée et mise à jour est utilisée par un procédé de mises en veille automatique. Deux exemples de procédés de mises en veille automatiques sont décrits en relation avec les Figs. 4 et 5. L'un ou l'autre de ces deux procédés est exécuté à chaque début de diffusion d'une nouvelle chaîne de télévision par le décodeur TV 11 (*i.e.* à chaque passage en mode actif du décodeur TV 11, à chaque changement de chaîne de télévision, ...) et à chaque passage à un nouveau programme. Le programme en cours de diffusion est analysé par le module de traitement 110 en utilisant les procédés décrits en relation avec les Figs. 4 ou 5 afin de déterminer si le décodeur TV 11 peut être mis en veille après la fin dudit programme. Les programmes ainsi analysés sont appelés *programmes cibles* par la suite.

La **Fig. 4** illustre schématiquement un premier exemple de procédé de mises en veille automatiques d'un décodeur TV.

Dans une étape 401, le module de traitement 110 obtient une information représentative d'un programme cible. Pour ce faire, le module de traitement 11 interroge le guide de programme électronique. L'information obtenue comprend :
- Le nom *NOM* du programme cible ;
- La date *D1* et l'heure *T1* du début du programme cible ;
- La date *D2* et l'heure *T2* de fin du programme cible.

A partir de la date *D2* et de l'heure *T2* de fin du programme cible, le module de traitement 110 détermine la date et l'heure de la prochaîne exécution du procédé de mises en veille automatiques. Dans un mode de réalisation, le module de traitement 110 ajoute une durée prédéfinie Δ à la date *D2* et à l'heure *T2.* Par exemple, la durée prédéfinie Δ égale cinq minutes. Dans cet exemple, le procédé de mises en veille automatiques est donc relancé cinq minutes après la fin de chaque programme diffusé par le décodeur TV 11, s'il n'y a pas eu de changement de chaîne de télévision entre temps.

Dans une étape 402, le module de traitement 110 effectue une recherche de programmes similaires au programme cible suivant un ou des critères de similarité prédéfinis dans la base de données. Dans un mode de réalisation, le nombre de critères de similarité est égal à trois.

Un premier critère de similarité est un critère de similarité de nom. Un premier programme dont le nom correspond au moins à un pourcentage prédéfini *P* au nom d'un second programme est considéré comme similaire au second programme. Un premier nom est similaire à un deuxième nom à un pourcentage de *P* %, lorsque *P* % des symboles constituant ces noms sont identiques et situés à la même position dans le nom. Dans un mode de réalisation *P*= 80%.

Un deuxième critère est un critère de similarité d'heure de début. Un premier programme dont l'heure de début est proche de l'heure de début d'un second programme d'un écart *e* inférieur à un écart prédéfini *E1* est considéré comme similaire au second programme.

Un troisième critère est un critère de similarité d'heure de fin. Un premier programme dont l'heure de fin est proche de l'heure de fin d'un second programme d'un écart *e* inférieur à l'écart prédéfini *E2* est considéré comme similaire au second programme.

Dans un mode de réalisation, *E1*=*E2*= 1 minute.

Dans un mode de réalisation, *E1*= *1 minute* et *E2*= 5 minutes.

Une valeur de compteur est associée à chaque critère de similarité. Le premier critère est associé à un compteur *c1*, le deuxième critère est associé à un compteur *c2* et le troisième critère est associé à un compteur *c3.*

Lors d'une étape 403, pour chaque programme de la base de données similaire au programme cible trouvé suivant au moins un des trois critères de similarité, le module de traitement 110 incrémente d'une unité le compteur correspondant à chaque critère de similarité respecté. Par exemple, *c1* est incrémenté d'une unité pour chaque entrée de la base de données comportant un nom similaire au nom du programme cible. *c2* est incrémenté d'une unité pour chaque entrée de la base de données comportant une heure de début similaire à l'heure de début du programme cible. *c3* est incrémenté d'une unité pour chaque entrée de la base de données comportant une heure de fin similaire à l'heure de fin du programme cible. Pour une même entrée de la base de données, un, deux ou trois compteurs peuvent être incrémentés suivant le nombre de critères respectés.

Suite à la recherche de programmes similaires dans la base de données, chaque compteur est comparé à une valeur de compteur prédéfinie. Lorsque pour au moins un des compteurs, la valeur dudit compteur dépasse la valeur de compteur prédéfinie, le module de traitement 110 considère, lors d'une étape 405, qu'il s'agit d'une détection positive. Sinon le module de traitement considère qu'il s'agit d'une détection négative.

Par exemple, soit *C1* (respectivement *C2* et *C3)* la valeur de compteur prédéfinie correspondant au premier (respectivement au deuxième et au troisième) critère de similarité. Si *c1 > C1* et/ou *c2* > *C2* et/ou *c3* > *C3*, le module de traitement 110 considère qu'il s'agit d'une détection positive. Si *c1* ≤ *C1* et *c2* ≤ *C2* et *c3* ≤ *C3,* le module de traitement 110 considère qu'il s'agit d'une détection négative. Dans un mode de réalisation *C1*=*C2*=*C3*=10*.*

Lors d'étapes 406 et 407, le module de traitement 110 détermine un seuil de durée d'inactivité S en fonction du nombre de programmes de la base de données similaires au programme cible.

Lors de l'étape 407, exécutée lorsque la détection est positive, le module de traitement 110 fixe le seuil de durée d'inactivité *S* à une valeur *D1.* Le programme cible est alors considéré comme candidat à une mise en veille accélérée.

Lors de l'étape 406, exécutée lorsque la détection est négative, le module de traitement 110 fixe le seuil de durée d'inactivité *S* à une valeur *D2, D2* étant supérieure à *D1.* Le programme cible est alors considéré comme candidat à une mise en veille classique.

Dans un mode de réalisation, *D1* = 20 minutes et *D2* = 120 minutes.

Suite aux étapes 406 et 407, le module de traitement 110 met en œuvre une étape 410.

Lors de l'étape 410, suite à la fin du programme cible, le module de traitement 110 se met en attente d'une interaction entre l'utilisateur et le décodeur TV 11. Une interaction entre un utilisateur et le décodeur TV 11 est, par exemple, un appui sur un bouton du décodeur TV 11 ou sur une touche de télécommande ou une commande vocale. Si aucune interaction n'est constatée entre un utilisateur et le décodeur TV 11 par le module de traitement 110 après la fin du programme en cours de diffusion pendant une période égale au seuil de durée d'inactivité S déterminé, le module de traitement 110 émet lors d'une étape 411 une notification destinée audit utilisateur avisant ledit utilisateur de la mise en veille imminente du décodeur TV 11. Cette notification est, par exemple, un message à afficher sur l'écran 12.

Si, lors d'une étape 413 suite à cette notification, aucune interaction entre un utilisateur et le décodeur 11 n'est constatée pendant une période prédéfinie *P*, égale par exemple à une minute, le module de traitement 110 met le décodeur TV 11 en veille lors d'une étape 414.

Si une interaction est constatée entre un utilisateur et le décodeur TV soit avant la fin de la période égale au seuil de durée d'inactivité *S* déterminé suivant la fin du programme en cours, soit avant la fin de la période prédéfinie *P* suivant l'émission de la notification, le module de traitement 110 n'émet pas de notification. Le décodeur TV 11 n'est alors pas mis en veille mais poursuit la diffusion du programme en cours lors d'une étape 412 (le programme en cours à ce stade du procédé étant un programme suivant le programme cible).

Le seuil de durée d'inactivité est donc ajusté en fonction des habitudes de l'utilisateur. Si l'utilisateur a l'habitude de mettre en veille le décodeur TV 11 au cours d'un programme donné, le seuil de durée d'inactivité à la suite de programmes similaires au programme donné est court. Si l'utilisateur n'a pas l'habitude de mettre en veille le décodeur TV 11 au cours d'un programme donné, le seuil de durée d'inactivité à la suite de programmes similaires au programme donné est long. La réduction de la consommation d'énergie par la mise en veille du décodeur TV est donc plus importante lorsqu'un programme est reconnu comme étant un programme pendant lequel le décodeur TV 11 est habituellement mis en veille. Par ailleurs, l'invention permet d'éviter la mise en veille pendant un programme habituellement regardé.

Dans un mode de réalisation, *C1, C2* et *C3* sont différents et par exemple égaux respectivement à « 5 », « 10 » et « 20 ».

Dans le mode de réalisation où chaque entrée de la base de données comprend une information représentative d'une chaîne de télévision, le module de traitement 110 obtient lors de l'étape 401 une information représentative de la chaîne de télévision diffusant le programme cible. Cette information est utilisée en complément de l'information du nom NOM du programme cible, de la date D1 et l'heure T1 du début du programme cible et de la date D2 et l'heure T2 de fin du programme cible. Par exemple pour que deux programmes soient considérés comme similaires suivant le critère de nom, il faut que ces deux programmes soient diffusés sur la même chaîne de télévision. Pour que deux programmes soient considérés comme similaires suivant le critère de similarité d'heure de début, il faut qu'ils soient diffusés sur la même chaîne de télévision. Enfin, pour que deux programmes soient considérés comme similaires suivant le critère de similarité d'heure de fin, il faut qu'ils soient diffusés sur la même chaîne de télévision.

Dans un mode de réalisation, un quatrième critère de similarité est une combinaison d'au moins deux des premier, deuxième et troisième critères de similarité.

Dans un mode de réalisation, un cinquième critère est une combinaison du deuxième critère de similarité (critère de similarité d'heure de début) et d'un critère de similarité de durée de deux programmes comparés. Par exemple, si deux programmes respectent le critère de similarité d'heure de début et ont une durée égale à plus ou moins Δ %, alors ces deux programmes sont considérés comme similaires. Par exemple Δ = 25%.

Dans un mode de réalisation, le jour de la semaine est pris en compte dans le critère de similarité. Par exemple, deux programmes sont considérés comme similaires s'ils respectent au moins un des premier, deuxième, troisième, ou cinquième critères et s'ils ont été diffusés un jour ayant le même nom dans une semaine (par exemple, les deux programmes ont été diffusés un lundi). Dans un autre exemple, deux programmes sont considérés comme similaires s'ils respectent au moins un des premier, deuxième, troisième, ou cinquième critères et s'ils ont été diffusés dans une même partie de semaine. Une semaine est par exemple découpée en deux parties, une première partie étant composée des lundi, mardi, mercredi, jeudi et vendredi et une deuxième partie étant composée des samedi et dimanche. Dans cet exemple, un programme diffusé un mardi est considéré comme différent d'un programme diffusé un samedi, même si les deux programmes respectent le critère de similarité d'heure de début.

On note que le nombre de critères de similarité observés pourrait être différent de trois sans que cela change le principe de l'invention, mais doit être supérieur ou égal à un.

La **Fig. 5** illustre schématiquement un deuxième exemple de procédé de mises en veille automatiques d'un décodeur TV.

On retrouve dans le procédé décrit en relation avec la Fig. 5 les étapes 401 à 407, 410 et 412 précédemment décrites.

Lorsque, lors de l'étape 410, le module de traitement 110 détermine qu'aucune interaction n'a été constatée entre un utilisateur et le décodeur TV 11 pendant une période égale au seuil de durée d'inactivité *S*, le module de traitement 110 détermine si un programme suivant immédiatement le programme cible est candidat à une veille accélérée ou à une veille classique. Le programme suivant immédiatement le programme cible est, à ce stade du procédé, le programme en cours de diffusion. Pour ce faire, le module de traitement 110 applique lors de l'étape 410, les étapes 401 à 405 sur le programme suivant le programme cible. En cas de détection positive lors de l'étape 405, le programme suivant le programme cible est déclaré candidat à une mise en veille accélérée. Sinon, le programme suivant le programme cible est déclaré candidat à une mise en veille classique.

Si le programme suivant le programme cible est candidat à une mise en veille classique, l'étape 511 est suivie d'étapes 513, 514 et 515 qui sont respectivement identiques aux étapes 411, 413 et 414.

Sinon, si le programme suivant le programme cible est candidat à une mise en veille accélérée, le module de traitement 110 n'émet pas de notification, ne met pas en veille le décodeur TV 11 et poursuit la diffusion du programme en cours. En effet, dans ce dernier cas, puisque le programme suivant le programme cible est candidat à une mise en veille, cela signifie que l'utilisateur a l'habitude de regarder ce programme et que ce n'est qu'après la fin de ce programme que le module de traitement peut envisager de mettre le décodeur TV en veille.

## Revendications

1. Procédé de gestion de mises en veille automatiques d'un système de décodage audio/vidéo, **caractérisé en ce que** le procédé comprend :
obtenir (401) une information représentative d'un programme en cours de diffusion par ledit système, dit programme cible ;
effectuer une recherche (402) de programmes similaires au programme cible suivant un ou des critères de similarité prédéfinis dans une base de données d'informations représentatives de programmes précédemment diffusés par ledit système, la diffusion de ces programmes ayant été interrompue par une mise en veille;
déterminer (406, 407) un seuil de durée d'inactivité en fonction du nombre de programmes de la base de données similaires au programme cible ;
lancer (411, 414) une procédure de mise en veille du système si aucune interaction n'est constatée entre un utilisateur et le système pendant une période égale au seuil de durée d'inactivité déterminé après la fin du programme cible.

2. Procédé selon la revendication 1, **caractérisé en ce que** la procédure de mise en veille du système comprend :
émettre (411) une notification destinée à un utilisateur avisant ledit utilisateur de la mise en veille imminente dudit système si aucune interaction n'est constatée entre ledit utilisateur et ledit système pendant la période égale au seuil de durée d'inactivité déterminé après la fin du programme cible ; et,
mettre (411, 414) le système en veille (414) si aucune interaction n'est constatée entre l'utilisateur et le système pendant une période prédéfinie après l'émission de la notification.

3. Procédé selon la revendication 1 ou 2, **caractérisé en ce que**, pour chaque programme de la base de données similaire au programme cible suivant le ou au moins un des critères de similarité prédéfinis trouvé lors de la recherche, pour chaque critère respecté, une valeur de compteur correspondant audit critère est incrémentée d'une unité, et lorsque, suite à la recherche de programmes similaires, la valeur de compteur correspondant audit critère ou à un desdits critères dépasse une valeur de compteur prédéfinie correspondant audit critère, le seuil de durée est fixé à une première durée prédéfinie et le programme cible est déclaré candidat à une mise en veille accélérée, sinon le seuil de durée est fixé à une seconde durée prédéfinie supérieure à la première durée prédéfinie et le programme cible est déclaré candidat à une mise en veille classique.

4. Procédé selon la revendication 3, **caractérisé en ce que**, préalablement à l'émission de la notification et à la mise en veille du système, le procédé comprend :
vérifier si un programme suivant immédiatement le programme cible est candidat à une mise en veille accélérée ou à une mise en veille classique ;
n'effectuer l'émission de la notification et la mise en veille que si ledit programme suivant est candidat à une mise en veille classique.

5. Procédé selon l'une quelconque des revendications 1 à 4, **caractérisé en ce que** la recherche de programmes similaires est basée sur un critère de similarité de nom, un premier programme dont le nom correspond au moins à un pourcentage prédéfini au nom d'un second programme étant considéré comme similaire au second programme, et/ou sur un critère de similarité d'heure de début, un premier programme dont l'heure de début est proche de l'heure de début d'un second programme d'un écart inférieur à un premier écart prédéfini est considéré comme similaire au second programme, et/ou sur un critère de similarité d'heure de fin, un premier programme dont l'heure de fin est proche de l'heure de fin d'un second programme d'un écart inférieur à un deuxième écart prédéfini est considéré comme similaire au second programme.

6. Procédé selon l'une quelconque des revendications 1 à 5, **caractérisé en ce que** les informations représentatives de programmes sont issues d'un guide de programme électronique reçu par le système de décodage audio/vidéo.

7. Procédé selon la revendication 6, **caractérisé en ce que**, préalablement à son utilisation, la base de données est créée en extrayant du guide de programme électronique, lors de chaque changement de chaîne sur le système de décodage audio/vidéo ou à intervalle prédéfini, des informations représentatives d'un programme en cours de diffusion, puis en stockant les informations représentatives extraites correspondant au dernier programme diffusé avant une mise en veille dans la base de données.

8. Procédé selon l'une quelconque des revendications précédentes, **caractérisé en ce que** la base de données est stockée en mémoire non volatile du système de décodage audio/vidéo.

9. Dispositif adapté pour gérer des mises en veille automatiques d'un système de décodage audio/vidéo, **caractérisé en ce qu'**il comprend :
des moyens pour obtenir une information représentative d'un programme en cours de diffusion par ledit système, dit programme cible ;
des moyens pour effectuer une recherche de programmes similaires au programme cible suivant un ou des critères de similarité prédéfinis dans une base de données d'informations représentatives de programmes précédemment diffusés par ledit système ;
des moyens pour déterminer un seuil de durée en fonction du nombre de programmes de la base de données similaires au programme cible ;
des moyens pour lancer une procédure de mise en veille du système si aucune interaction n'est constatée entre un utilisateur et le système pendant une période égale au seuil de durée d'inactivité déterminé après la fin du programme cible.

10. Programme d'ordinateur, **caractérisé en ce qu'**il comprend des instructions pour mettre en œuvre, par un dispositif, le procédé selon l'une quelconque des revendications 1 à 8 lorsque ledit programme est exécuté par un processeur dudit dispositif.

11. Moyens de stockage, **caractérisés en ce qu'**ils stockent un programme d'ordinateur comprenant des instructions pour mettre en œuvre, par un dispositif, le procédé selon l'une quelconque des revendications 1 à 8 lorsque ledit programme est exécuté par un processeur dudit dispositif.

## Patentansprüche

1. Verfahren zur Verwaltung des automatischen Versetzens eines Audio-/Video-Decodiersystems in den Standbymodus, **dadurch gekennzeichnet, dass** das Verfahren enthält:
Erhalt (401) einer für ein vom System gerade ausgestrahltes, Zielprogramm genanntes Programm repräsentativen Information;
Ausführen einer Suche (402) nach dem Zielprogramm ähnlichen Programmen gemäß einem oder mehreren vordefinierten Ähnlichkeitskriterien in einer Bank von für vorher von dem System ausgestrahlte Programme repräsentativen Informationen, wobei die Ausstrahlung dieser Programme durch ein Versetzen in den Standbymodus unterbrochen wurde;
Bestimmen (406, 407) einer Inaktivitätsdauerschwelle abhängig von der Anzahl von dem Zielprogramm ähnlichen Programmen der Datenbank;
Start (411, 414) einer Prozedur des Versetzens des Systems in den Standbymodus, wenn keine Interaktion zwischen einem Benutzer und dem System während einer Zeitdauer gleich der bestimmten Inaktivitätsdauerschwelle nach dem Ende des Zielprogramms festgestellt wird.

2. Verfahren nach Anspruch 1, **dadurch gekennzeichnet, dass** die Prozedur des Versetzens des Systems in den Standbymodus enthält:
Senden (411) einer für einen Benutzer bestimmten Benachrichtigung, die dem Benutzer das bevorstehende Versetzen des Systems in den Standbymodus mitteilt, wenn während des Zeitraums gleich der bestimmten Inaktivitätsdauerschwelle nach dem Ende des Zielprogramms keine Interaktion zwischen dem Benutzer und dem System festgestellt wird; und
Versetzen (411, 414) des Systems in den Standbymodus (414), wenn keine Interaktion zwischen dem Benutzer und dem System während eines vordefinierten Zeitraums nach dem Senden der Benachrichtigung festgestellt wird.

3. Verfahren nach Anspruch 1 oder 2, **dadurch gekennzeichnet, dass** für jedes bei der Suche gefundene Programm der Datenbank, das dem Zielprogramm gemäß dem oder mindestens einem der vordefinierten Ähnlichkeitskriterien ähnlich ist, für jedes beachtete Kriterium ein dem Kriterium entsprechender Zählerwert um eine Einheit inkrementiert wird, und wenn nach der Suche von ähnlichen Programmen der dem Kriterium oder einem der Kriterien entsprechende Zählerwert einen dem Kriterium entsprechenden vordefinierten Zählerwert überschreitet, die Dauerschwelle auf eine erste vordefinierte Dauer festgelegt wird und das Zielprogramm zum Kandidaten für ein beschleunigtes Versetzen in den Standbymodus erklärt wird, andernfalls wird die Dauerschwelle auf eine zweite vordefinierte Dauer höher als die erste vorher definierte Dauer festgelegt, und das Zielprogramm wird zum Kandidaten für ein klassisches Versetzen in den Standbymodus erklärt.

4. Verfahren nach Anspruch 3, **dadurch gekennzeichnet, dass** vor dem Senden der Benachrichtigung und dem Versetzen des Systems in den Standbymodus das Verfahren enthält:
Überprüfen, ob ein direkt auf das Zielprogramm folgendes Programm Kandidat für ein beschleunigtes Versetzen in den Standbymodus oder für ein klassisches Versetzen in den Standbymodus ist;
das Senden der Benachrichtigung und das Versetzen in den Standbymodus nur auszuführen, wenn das folgende Programm Kandidat für ein klassisches Versetzen in den Standbymodus ist.

5. Verfahren nach einem der Ansprüche 1 bis 4, **dadurch gekennzeichnet, dass** die Suche nach ähnlichen Programmen auf einem Namensähnlichkeitskriterium, wobei ein erstes Programm, dessen Name mindestens einem vordefinierten Prozentsatz des Namens eines zweiten Programms entspricht, als dem zweiten Programm ähnlich betrachtet wird, und/oder auf einem Anfangsuhrzeit-Ähnlichkeitskriterium, wobei ein erstes Programm, dessen Anfangsuhrzeit der Anfangsuhrzeit eines zweiten Programms um eine Abweichung geringer als eine erste vordefinierte Abweichung nahe ist, als dem zweiten Programm ähnlich betrachtet wird, und/oder auf einem Enduhrzeit-Ähnlichkeitskriterium basiert, wobei ein erstes Programm, dessen Enduhrzeit der Enduhrzeit eines zweiten Programms um eine Abweichung geringer als eine zweite vordefinierte Abweichung nahe ist, als dem zweiten Programm ähnlich betrachtet wird.

6. Verfahren nach einem der Ansprüche 1 bis 5, **dadurch gekennzeichnet, dass** die für Programme repräsentativen Informationen von einem elektronischen Programmführer stammen, der vom Audio-/Video-Decodiersystem empfangen wird.

7. Verfahren nach Anspruch 6, **dadurch gekennzeichnet, dass** die Datenbank vor ihrer Verwendung erzeugt wird, indem aus dem elektronischen Programmführer bei jedem Kanalwechsel im Audio-/Video-Decodiersystem oder in vordefiniertem Zeitabstand für ein gerade ausgestrahltes Programm repräsentative Informationen entnommen werden, dann die entnommenen repräsentativen Informationen, die dem letzten vor einem Versetzen in den Standbymodus ausgestrahlten Programm entsprechen, in der Datenbank gespeichert werden.

8. Verfahren nach einem der vorhergehenden Ansprüche, **dadurch gekennzeichnet, dass** die Datenbank in einem nichtflüchtigen Speicher des Audio-/Video-Decodiersystems gespeichert wird.

9. Vorrichtung, die geeignet ist, automatische Versetzungen eines Audio-/Video-Decodiersystems in den Standbymodus zu verwalten, **dadurch gekennzeichnet, dass** sie enthält:
Einrichtungen zum Erhalt einer für ein vom System gerade ausgestrahltes, Zielprogramm genanntes Programm repräsentativen Information;
Einrichtungen zur Ausführung einer Suche nach dem Zielprogramm ähnlichen Programmen gemäß einem oder mehreren vordefinierten Ähnlichkeitskriterien in einer Bank von für vorher von dem System ausgestrahlte Programme repräsentativen Informationen;
Einrichtungen zur Bestimmung einer Dauerschwelle abhängig von der Anzahl von dem Zielprogramm ähnlichen Programmen der Datenbank;
Einrichtungen zum Start einer Prozedur des Versetzens des Systems in den Standbymodus, wenn keine Interaktion zwischen einem Benutzer und dem System während einer Zeitdauer gleich der bestimmten Inaktivitätsdauerschwelle nach dem Ende des Zielprogramms festgestellt wird.

10. Computerprogramm, **dadurch gekennzeichnet, dass** es Anweisungen enthält, um das Verfahren nach einem der Ansprüche 1 bis 8 durch eine Vorrichtung durchzuführen, wenn das Programm von einem Prozessor der Vorrichtung ausgeführt wird.

11. Speichereinrichtungen, **dadurch gekennzeichnet, dass** sie ein Computerprogramm speichern, das Anweisungen enthält, um das Verfahren nach einem der Ansprüche 1 bis 8 durch eine Vorrichtung durchzuführen, wenn das Programm von einem Prozessor der Vorrichtung ausgeführt wird.

## Claims

1. Method for managing automatic standby of an audio/video decoding system, **characterised in that** the method comprises:
obtaining (401) information representing a programme being broadcast by said system, referred to as the target programme;
making a search (402) for programmes similar to the target programme in accordance with one or more predefined similarity criteria in a database of information representing programmes previously broadcast by said system, the broadcasting of these programmes having been interrupted by a standby;
determining (406, 407) a duration-of-inactivity threshold according to the number of programmes in the database similar to the target programme;
initiating (411, 414) a standby procedure for the system if no interaction is found between a user and the system during a period equal to the duration-of-inactivity threshold determined after the end of the target programme.

2. Method according to claim 1, **characterised in that** the standby procedure for the system comprises:
sending (411) a notification intended for a user advising said user of the imminent standby of said system if no interaction is noted between said user and said system during the period equal to the duration-of-inactivity threshold determined after the end of the target programme; and
putting (411, 414) the system on standby (414) if no interaction is noted between the user and the system during a predefined period after the sending of the notification.

3. Method according to claim 1 or 2, **characterised in that**, for each programme in the database similar to the target programme following the or at least one of the predefined similarity criteria found during the search, for each criterion met, a counter value corresponding to said criterion is incremented by one unit and, when, following the search for similar programmes, the counter value corresponding to said criterion or to one of said criteria exceeds a predefined counter value corresponding to said criterion, the duration threshold is fixed at a first predefined duration and the target programme is declared to be a candidate for an accelerated standby, otherwise the duration threshold is fixed at a second predefined duration greater than the first predefined duration and the target programme is declared to be a candidate for a conventional standby.

4. Method according to claim 3, **characterised in that**, prior to the sending of the notification and to the standby of the system, the method comprises:
checking whether a programme immediately following the target programme is a candidate for accelerated standby or for conventional standby;
sending the notification implementing the standby only if said following programme is a candidate for conventional standby.

5. Method according to any one of claims 1 to 4, **characterised in that** the search for similar programmes is based on a criterion of similarity of name, a first programme the name of which corresponds to the name of a second programme at least by a predefined percentage being considered to be similar to the second programme, and/or on a criterion of similarity of start time, a first programme the start time of which is close to the start time of a second programme by a difference less than a first predefined difference is considered to be similar to the second programme, and/or on a criterion of similarity of end time, a first programme the end time of which is close to the end time of a second programme by a difference less than a predefined second difference is considered to be similar to the second programme.

6. Method according to any one of claims 1 to 5, **characterised in that** the information representing programmes comes from an electronic programme guide received by the audio/video decoding system.

7. Method according to claim 6, **characterised in that**, prior to use thereof, the database is created by extracting from the electronic programme guide, at each change of television channel on the audio/video decoding system or at predefined intervals, information representing a programme being broadcast, and then by storing the extracted representative information corresponding to the last programme broadcast before a standby in the database.

8. Method according to any one of the preceding claims, **characterised in that** the database is stored in a non-volatile memory of the audio/video decoding system.

9. Device adapted for managing automatic standby of an audio/video decoding system, **characterised in that** it comprises:
means for obtaining information representing a programme being broadcast by said system, referred to as the target programme;
means for seeking programmes similar to the target programme in accordance with one or more predefined similarity criteria in a database of information representing programmes previously broadcast by said system;
means for determining a duration-of-inactivity threshold according to the number of programmes in the database similar to the target programme;
means for initiating a standby procedure for the system if no interaction is found between a user and the system during a period equal to the duration-of-inactivity threshold determined after the end of the target programme.

10. Computer program, **characterised in that** it comprises instructions for implementing, by a device, the method according to any one of claims 1 to 8 when said program is executed by a processor of said device.

11. Storage means, **characterised in that** they store a computer program comprising instructions for implementing, by a device, the method according to any one of claims 1 to 8 when said program is executed by a processor of said device.
